# EUROPEAN PATENT APPLICATION

(11) **EP 4 613 437 A1**
(43) Date of publication of application: **10.09.2025**
(21) Application number: 25156380.5
(22) Date of filing: 06.02.2025
(51) Int. Cl.: B25J 5/00, B25J 11/00, B25J 13/08, B25J 19/02

(54) **AUTONOMOUS TRAVELING ROBOT OPERATION SYSTEM, AUTONOMOUS TRAVELING ROBOT OPERATION METHOD, AND PROGRAM**

(30) Priority: 06.03.2024 JP 2024034184
(71) Applicant: TOYOTA JIDOSHA KABUSHIKI KAISHA, Aichi-Ken 471-8571 (JP); Nagoya Denki Educational Foundation, Aichi 464-8540 (JP)
(72) Inventor: YAMAMOTO, Takashi, Toyota-shi, 470-0392 (JP); TANADA, Kosei, Toyota-shi, 471-8571 (JP); IWANAGA, Yuka, Toyota-shi, 471-8571 (JP); TSUCHINAGA, Masayoshi, Toyota-shi, 471-8571 (JP)
(74) Representative: D Young & Co LLP

(57) **Abstract**

An autonomous traveling robot operation system that improves the ease with which an autonomous traveling robot (100) is operated by using a voice input and a handwritten input is provided. An autonomous traveling robot operation system including: an autonomous traveling robot (100) configured to shoot an environment near the autonomous traveling robot (100) and operates an object to be operated; a handwritten input interface (360) configured to display an image shot by the autonomous traveling robot (100) and receive a handwritten input to the displayed image; and a voice input interface (360) configured to receive a voice input to the object to be operated, in which the autonomous traveling robot operation system operates the autonomous traveling robot (100) in such a way that the autonomous traveling robot (100) operates the object to be operated in accordance with instructions of the handwritten input and the voice input is provided.

## Description

### BACKGROUND

The present disclosure relates to an autonomous traveling robot operation system, an autonomous traveling robot operation method, and a program.

Patent Literature 1 discloses a remote control system that operates an end effector by a handwritten input and a text chat.

[Patent Literature 1] Japanese Unexamined Patent Application Publication No. 2021-94604

### SUMMARY

However, in the method disclosed in Patent Literature 1, a text chat needs to be input by hand, which causes input to be complicated since the handwritten input and the operation of the end effector overlap each other. An object of the present disclosure is to provide an autonomous traveling robot operation system that improves the ease with which an autonomous traveling robot is operated by using a voice input and a handwritten input.

A robot operation system according to the present disclosure is an autonomous traveling robot operation system including: an autonomous traveling robot configured to shoot an environment near the autonomous traveling robot and operates an object to be operated; a handwritten input interface configured to display an image shot by the autonomous traveling robot and receive a handwritten input to the displayed image; and a voice input interface configured to receive a voice input to the object to be operated, in which the autonomous traveling robot operation system operates the autonomous traveling robot in such a way that the autonomous traveling robot operates the object to be operated in accordance with instructions of the handwritten input and the voice input.

With the above configuration, an autonomous traveling robot operation system that improves the ease with which an autonomous traveling robot is operated by using a voice input and a handwritten input is provided.

**In** the robot operation system according to the present disclosure, the voice input interface enables a user to have a conversation with the autonomous traveling robot using a voice recognition unit that receives a voice, recognizes the voice, and outputs a motion, the voice recognition unit being configured by performing machine learning, and inputs a motion of the autonomous traveling robot.

The above configuration is one example of voice recognition using Artificial Intelligence (AI).

In the robot operation system according to the present disclosure, an instruction is sent to the object to be operated that is not displayed on the image using the voice input interface.

With the above configuration, it is possible to send an instruction to the object to be operated that is not directly displayed on the image.

In the robot operation system according to the present disclosure, the handwritten input interface inputs the object to be operated using an object estimation unit configured to perform machine learning so as to receive the image as an input, estimate an object in the image, and output a result of the estimation.

The above configuration is one example of object estimation using Artificial Intelligence (AI).

In the robot operation system according to the present disclosure, a trajectory of the autonomous traveling robot is input by using the handwritten input interface.

With the above configuration, it is possible to easily input a trajectory of an autonomous traveling robot.

In the robot operation system according to the present disclosure, an adverbial operation of a motion is input by using the handwritten input interface.

With the above configuration, it is possible to intuitively operate a motion of an autonomous traveling robot.

In the robot operation system according to the present disclosure, the autonomous traveling robot is operated to perform grasping, cutting, moving, screw fixing, or welding.

The above configuration is one example of an operation of an autonomous traveling robot.

A robot operation method according to the present disclosure is an autonomous traveling robot operation method including operating an autonomous traveling robot in such a way that the autonomous traveling robot operates an object to be operated in accordance with instructions of a handwritten input and a voice input.

With the above configuration, an autonomous traveling robot operation method for operating an autonomous traveling robot more easily by using a voice input and a handwritten input is provided.

A program according to the present disclosure causes an information processing apparatus to operate an autonomous traveling robot in such a way that the autonomous traveling robot operates an object to be operated in accordance with instructions of a handwritten input and a voice input.

With the above configuration, a program of an information processing apparatus that improves the ease with which an autonomous traveling robot is operated using a voice input and a handwritten input is provided.

According to the present disclosure, it is possible to provide an autonomous traveling robot operation system and the like that operate an autonomous traveling robot more easily using a voice input and a handwritten input.

The above and other objects, features and advantages of the present disclosure will become more fully understood from the detailed description given hereinbelow and the accompanying drawings.

### BRIEF DESCRIPTION OF DRAWINGS

Fig. 1 shows an outline of an autonomous traveling robot operation system according to an embodiment;
Fig. 2 shows an example of a display screen displayed on a display panel of a remote terminal according to the embodiment;
Fig. 3 is an external perspective view showing an example of an external configuration of an autonomous traveling robot according to the embodiment;
Fig. 4 is a block diagram showing a configuration of the autonomous traveling robot according to the embodiment;
Fig. 5 shows an example of a shot image acquired by the autonomous traveling robot according to the embodiment;
Fig. 6 shows an example of an area that can be operated which a learned model outputs according to the embodiment;
Fig. 7 is a block diagram showing a configuration of a remote terminal according to the embodiment;
Fig. 8 is a flowchart showing an autonomous traveling robot operation method according to the embodiment; and
Fig. 9 shows an example of the display screen displayed on the display panel of the remote terminal according to the embodiment.

### DESCRIPTION OF EMBODIMENTS

### Embodiments

Hereinafter, with reference to the drawings, an embodiment of the present application will be described. However, the invention set forth in the claims is not limited to the following embodiment. Further, all the components/structures described in the embodiment are not necessarily indispensable as means for solving the problem. For clarifying the explanation, the following description and drawings are partially omitted and simplified as appropriate. The same reference numerals (or symbols) are assigned to the same elements throughout the drawings and redundant descriptions thereof are omitted as appropriate. Further, in the following embodiment, a robot including a hand at the tip of its arm as an end effector will be described as an example of a target to be operated, but the target to be operated is not limited thereto.

### (Description of Autonomous Traveling Robot Operation System according to Embodiment)

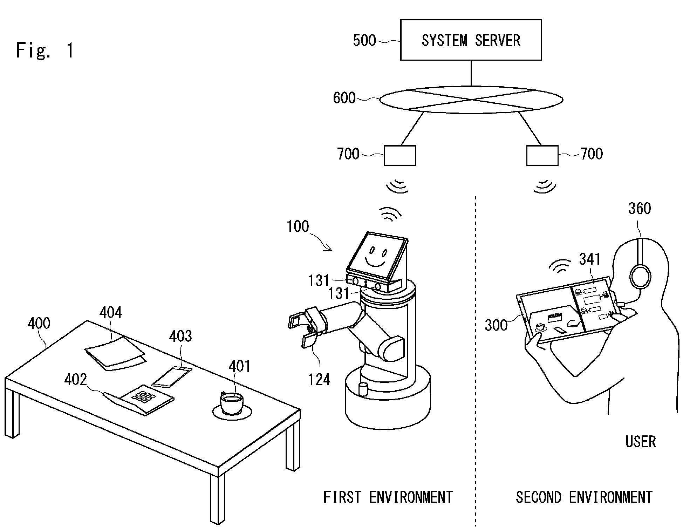

Fig. 1 shows an outline of an autonomous traveling robot operation system according to an embodiment. An autonomous traveling robot 100 that performs various kinds of motions in a first environment is remotely controlled via a system server 500 connected to an Internet 600 by allowing a user who is a remote operator present in a second environment distant from the first environment to operate a remote terminal 300 (an operation terminal). The remote terminal 300 is also referred to as a handwritten input interface 300.

In the first environment, the autonomous traveling robot 100 is connected to the Internet 600 via a wireless router 700. Further, in the second environment, the remote terminal 300 is connected to the Internet 600 via the wireless router 700. The system server 500 is connected to the Internet 600. The autonomous traveling robot 100 performs a grasping motion or the like by a hand 124 in accordance with an operation of the remote terminal 300.

Note that in this embodiment, motions performed by the hand 124 are not limited to motions for simply grasping (holding) an object to be operated, but also include, for example, the following motions.
·a motion for holding and lifting an object to be operated
·a motion for, when an object to be operated is a knob for a door or a drawer of a cabinet or the like, holding the knob and then opening and closing the door or the drawer
·a motion for, when an object to be operated is a door knob of a door, holding the door knob and then opening and closing the door
·a motion for cutting an object to be operated
·a motion for moving an object to be operated
·a motion for fixing an object to be operated with a screw
·a motion for welding an object to be operated

The autonomous traveling robot 100 shoots the first environment in which the autonomous traveling robot 100 is located by a stereo camera 131 (an imaging unit), and transmits the shot image to the remote terminal 300 via the Internet 600. The example of Fig. 1 shows that the autonomous traveling robot 100 is shooting a table 400 located in the first environment.

The remote terminal 300 is, for example, a tablet terminal, and includes a display panel 341 on which a touch panel is superimposed. The shot image received from the autonomous traveling robot 100 is displayed on the display panel 341, and thus a user can indirectly view the first environment in which the autonomous traveling robot 100 is located. Further, a user can input handwritten input information by handwriting to the shot image displayed on the display panel 341. The handwritten input information is, for example, information indicating an object to be operated which has been requested to be operated by the hand 124, an adverbial way of performing an operating motion with regard to the object to be operated, and the like. As a method for inputting the handwritten input information, for example, a method in which the touch panel disposed so as to be superimposed on the display panel 341 is touched with a finger of a user, a touch pen, or the like can be used, but the method therefor is not limited to this. The handwritten input information which a user has input to the shot image is transmitted to the autonomous traveling robot 100 via the Internet 600.

Further, the remote terminal 300 includes a voice input interface 360 for allowing a user to have a voice conversation with the autonomous traveling robot 100. The voice input interface 360 enables a user to have a conversation with the autonomous traveling robot 100 using a voice recognition unit that receives a voice, recognizes the voice, and outputs a motion, the voice recognition unit being configured by performing machine learning, and inputs a motion of the autonomous traveling robot 100. An utterance input by a user is transmitted to the autonomous traveling robot 100 via the Internet 600. Further, a response utterance to a user's utterance generated by the autonomous traveling robot 100 is received from the autonomous traveling robot 100 via the Internet 600.

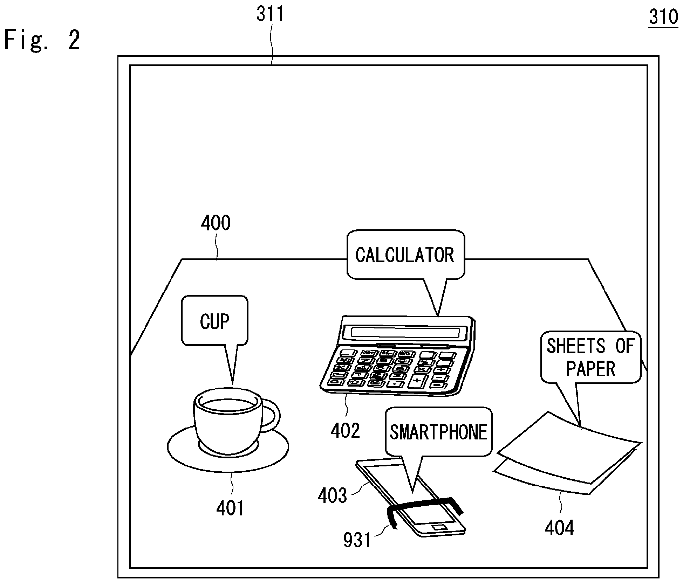

Fig. 2 shows an example of a display screen displayed on the display panel of the remote terminal according to the embodiment. In the example shown in Fig. 2, a shot image 311 shot by the autonomous traveling robot 100 is arranged on the display screen 310.

The shot image 311 shows a table 400, and a cup 401, a calculator 402, a smartphone 403, and sheets of paper 404 placed on the table 400. Further, the cup 401, the calculator 402, the smartphone 403, and the sheets of paper 404 are objects that can be operated by the hand 124. Therefore, the shot image 311 is processed so as to display the names of the objects that can be operated in a speech balloon form, so that a user can visually recognize the objects that can be operated. Further, handwritten input information 931 is input to the shot image 311 by a user by handwriting.

The autonomous traveling robot 100 estimates, based on handwritten input information which a user has input to a shot image and a conversation history of a voice input, an object to be operated which has been requested to be operated by the hand 124 and estimates a way of performing an operation by the hand 124, the operation having been requested to be performed with regard to the estimated object to be operated.

In the example shown in Fig. 2, the handwritten input information 931 is input to a position on the smartphone 403 on the shot image 311. Further, it is assumed that a grasping motion for holding and lifting an object to be operated has been requested by a voice input. The autonomous traveling robot 100 can estimate, based on the handwritten input information 931 and the voice input, that the object to be operated is the smartphone 403 placed on the table 400, and that a way of performing a motion is to hold and lift the smartphone 403. Note that in the example shown in Fig. 2, the handwritten input information 931 is an image that simulates holding the smartphone 403 from above, but it is not limited to this. The handwritten input information 931 may simply be an image indicating that the smartphone 403 is the object to be operated, and a user may indicate a way of performing a motion in a conversation with the autonomous traveling robot 100 through a voice input. As the image of the handwritten input information 931 indicating that the smartphone 403 is the object to be operated, for example, an image in which the smartphone 403 is indicated by an arrow or an image in which the smartphone 403 is enclosed in any figure (e.g., a circle) may be used.

Further, the autonomous traveling robot 100 may determine whether there is an additionally requested motion to be performed by the autonomous traveling robot 100 based on the conversation history of the text chat, and if the autonomous traveling robot 100 determines that there is an additionally requested motion, the autonomous traveling robot 100 may estimate a way of performing this motion.

For example, conveyance of the smartphone 403 to a living room has been requested by a voice input. Therefore, the autonomous traveling robot 100 can estimate that the autonomous traveling robot 100 has been additionally requested to convey the smartphone 403 held by the grasping motion to the living room based on the voice input.

Therefore, in the example shown in Fig. 2, the autonomous traveling robot 100 can estimate that the overall motion that has been requested to be performed by the autonomous traveling robot 100 is to hold the smartphone 403 and convey it to the living room.

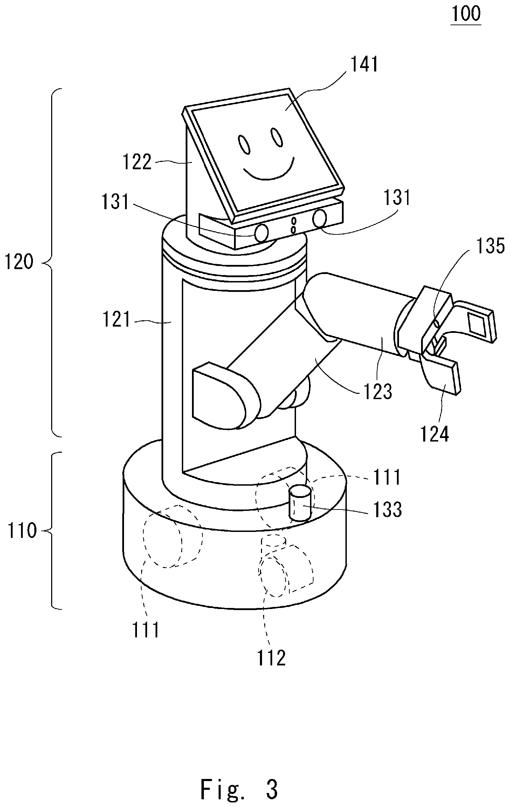

Fig. 3 is an external perspective view showing an example of an external configuration of the autonomous traveling robot according to the embodiment. The autonomous traveling robot 100 includes, mainly, a movable base part 110 and a main-body part 120. The movable base part 110 supports two driving wheels 111 and a caster 112, each of which is in contact with a traveling surface, inside its cylindrical housing. The two driving wheels 111 are arranged so that the centers of their rotation axes coincide with each other. Each of the driving wheels 111 is rotationally driven by a motor (not shown) independently of each other. The caster 112 is a driven wheel and is disposed so that its pivotal axis extending from the movable base part 110 in the vertical direction axially supports the wheel at a place away from its rotation axis. Further, the caster 112 follows the movement of the movable base part 110 so as to move in the moving direction of the movable base part 110.

The movable base part 110 includes a laser scanner 133 in a peripheral part of its top surface. The laser scanner 133 scans a certain range on the horizontal plane at intervals of a certain stepping angle and outputs information as to whether or not there is an obstacle in each direction. Further, when there is an obstacle, the laser scanner 133 outputs a distance to the obstacle.

The main-body part 120 includes, mainly, a body part 121 mounted on the top surface of the movable base part 110, a head part 122 placed on the top surface of the body part 121, an arm 123 supported on a side surface of the body part 121, and the hand 124 disposed at the tip of the arm 123. The arm 123 and the hand 124 are driven by motors (not shown) and grasp an object to be operated. The body part 121 is able to rotate around a vertical axis with respect to the movable base part 110 by a driving force of a motor (not shown). Depending on its application, a welding device or a cutting device may be attached in place of the hand 124.

The head part 122 mainly includes the stereo camera 131 and a display panel 141. The stereo camera 131 has a configuration in which two camera units having the same angle of view are arranged away from each other, and outputs imaging signals of images shot by the respective camera units.

The display panel 141 is, for example, a liquid crystal display panel, and displays an animated face of a pre-defined character and displays information about the autonomous traveling robot 100 in the form of text or by using icons. By displaying the face of the character on the display panel 141, it is possible to impart an impression that the display panel 141 is a pseudo face part to people around the autonomous traveling robot 100.

The head part 122 is able to rotate around a vertical axis with respect to the body part 121 by a driving force of a motor (not shown). Thus, the stereo camera 131 can shoot an image in any direction. Further, the display panel 141 can show displayed contents in any direction.

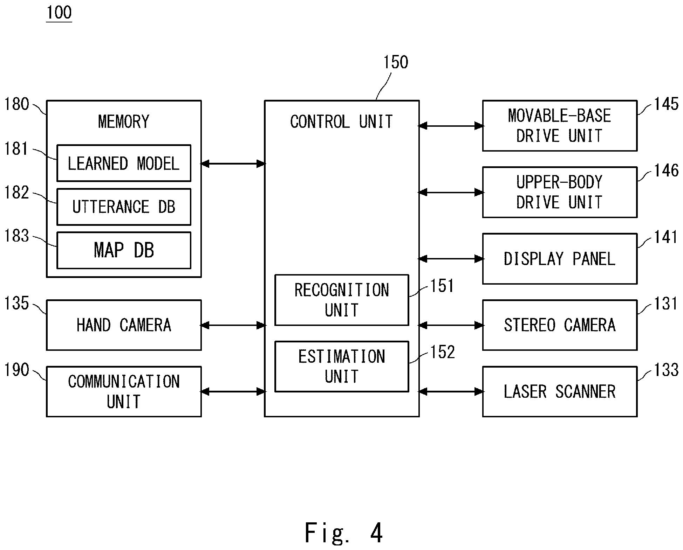

Fig. 4 is a block diagram showing a configuration of the autonomous traveling robot according to the embodiment. Main elements related to an estimation of an object to be operated and an estimation of a way of performing a motion will be described below. However, the autonomous traveling robot 100 includes elements in its configuration other than the above ones and may include additional elements that contribute to the estimation of an object to be operated and the estimation of a way of performing a motion.

The autonomous traveling robot 100 includes an information processing apparatus including a control unit 150 including a processor that executes a program to perform processing and a memory 180 that stores the program. The control unit 150 is, for example, a CPU, and is included in, for example, a control unit disposed in the body part 121. A movable-base drive unit 145 includes the driving wheels 111, and a driving circuit and motors for driving the driving wheels 111. The control unit 150 performs rotation control of the driving wheels by sending a driving signal to the movable-base drive unit 145. Further, the control unit 150 receives a feedback signal such as an encoder signal from the movable-base drive unit 145 and recognizes a moving direction and a moving speed of the movable base part 110.

An upper-body drive unit 146 includes the arm 123 and the hand 124, the body part 121, the head part 122, and driving circuits and motors for driving these components. The control unit 150 performs a grasping motion and a gesture by transmitting a driving signal to the upper-body drive unit 146. Further, the control unit 150 receives a feedback signal such as an encoder signal from the upper-body drive unit 146, and recognizes positions and moving speeds of the arm 123 and the hand 124, and orientations and rotation speeds of the body part 121 and the head part 122.

The display panel 141 receives an image signal generated by the control unit 150 and displays an image thereof. Further, as described above, the control unit 150 generates an image signal of the character or the like and displays an image thereof on the display panel 141.

The stereo camera 131 shoots the first environment in which the autonomous traveling robot 100 is located in accordance with a request from the control unit 150 and passes an obtained imaging signal to the control unit 150. The control unit 150 performs image processing by using the imaging signal and converts the imaging signal into a shot image in accordance with a predetermined format. The laser scanner 133 detects whether there is an obstacle in the moving direction of the autonomous traveling robot 100 in accordance with a request from the control unit 150 and passes a detection signal, which is a result of the detection, to the control unit 150.

A hand camera 135 is, for example, a distance image sensor, and is used to recognize a distance to an object to be operated, a shape of an object to be operated, a direction in which an object to be operated is located, and the like. The hand camera 135 includes an image pickup device in which pixels for performing a photoelectrical conversion of an optical image incident from a target space are two-dimensionally arranged, and outputs a distance to the subject to the control unit 150 for each of the pixels. Specifically, the hand camera 135 includes an irradiation unit for irradiating a pattern light to the target space, and receives the reflected light of the pattern light by the image pickup device to output a distance to the subject captured by each of the pixels based on a distortion and a size of the pattern in the image. Note that the control unit 150 recognizes a state of a wider surrounding environment by the stereo camera 131 and recognizes a state in the vicinity of the object to be operated by the hand camera 135.

A memory 180 is a nonvolatile storage medium. For example, a solidstate drive is used for the memory 180. The memory 180 stores, in addition to a control program for controlling the autonomous traveling robot 100, various parameter values, functions, lookup tables, and the like used for the control and the calculation. In particular, the memory 180 stores a learned model 181, an utterance DB 182, and a map DB 183.

The learned model 181 is a learned model that uses a shot image as an input image and outputs objects that can be operated shown in the shot image. Further, the learned model 181 is a learned model that receives a voice, recognizes the voice, and outputs a motion. The utterance DB 182 is composed of, for example, a storage medium of a hard disk drive, and is a database that stores individual terms organized as a corpus with reproducible utterance data.

The map DB 183 is composed of, for example, a storage medium of a hard disk drive, and is a database that stores map information describing a space in the first environment in which the autonomous traveling robot 100 is located.

A communication unit 190 is, for example, a wireless LAN unit and performs radio communication with the wireless router 700. The communication unit 190 receives the handwritten input information input to the shot image and a voice input by a user, which are sent from the remote terminal 300, and passes them to the control unit 150. Further, the communication unit 190 transmits to the remote terminal 300, under the control of the control unit 150, a shot image shot by the stereo camera 131. The communication unit 190 further transmits to the voice input interface 360 the voice output of the response utterance to the user's utterance generated by the control unit 150.

The control unit 150 performs control of the whole autonomous traveling robot 100 and various calculation processes by executing a control program read from the memory 180. Further, the control unit 150 also serves as a function execution unit that executes various calculations and controls related to the control. As such function execution units, the control unit 150 includes a recognition unit 151 and an estimation unit 152. The estimation unit 152 is also referred to as an object estimation unit.

The recognition unit 151 uses a shot image shot by one of the camera units of the stereo camera 131 as an input image, obtains areas that can be operated by the hand 124 in the shot image from the learned model 181 read from the memory 180, and recognizes objects that can be operated.

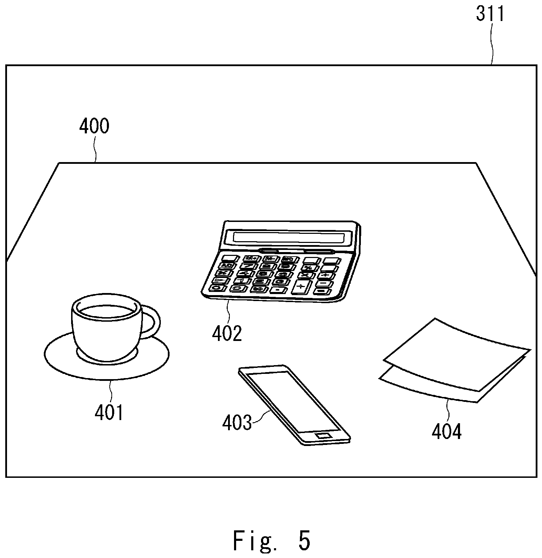

Fig. 5 shows an example of the shot image which the autonomous traveling robot according to the embodiment has acquired. For example, Fig. 5 shows an example of the shot image 311 of the first environment which the autonomous traveling robot 100 has acquired by the stereo camera 131. The shot image 311 in Fig. 5 shows the table 400, and the cup 401, the calculator 402, the smartphone 403, and the sheets of paper 404 placed on the table 400. The recognition unit 151 provides the shot image 311 described above to the learned model 181 as an input image.

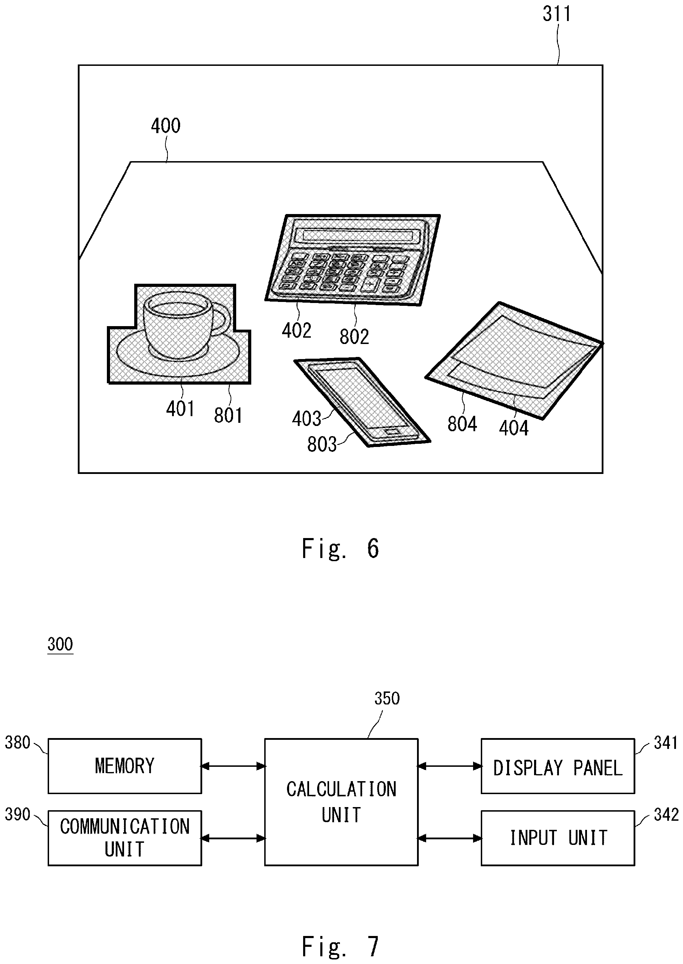

Fig. 6 shows an example of areas that can be operated output by the learned model according to the embodiment. For example, Fig. 6 shows an example of areas that can be operated output by the learned model 181 when the shot image 311 shown in Fig. 5 is used as an input image. Specifically, an area that surrounds the cup 401 is detected as an area 801 that can be operated, an area that surrounds the calculator 402 is detected as an area 802 that can be operated, an area that surrounds the smartphone 403 is detected as an area 803 that can be operated, and an area that surrounds the sheets of paper 404 is detected as an area 804 that can be operated. Thus, the recognition unit 151 recognizes each of the cup 401, the calculator 402, the smartphone 403, and the sheets of paper 404, which are surrounded by the respective areas 801 to 804 that can be operated, as an object that can be operated.

The learned model 181 is a neural network learned from teaching data which is a combination of an image showing objects that can be operated by the hand 124 and a correct answer to which area of the image is the object that can be operated. At this time, by preparing the teaching data so as to further indicate the names of the objects that can be operated, the distances to the objects that can be operated, and the directions in which the objects that can be operated are located shown in the image, the learned model 181, which uses the shot image as an input image, can output not only the objects that can be operated but also the names of the objects that can be operated, the distances to the objects that can be operated, and the directions in which the objects that can be operated are located. Note that the learned model 181 may be a neural network learned by deep learning. Further, teaching data may be added to the learned model 181 as necessary so that it performs additional learning.

Further, the recognition unit 151 may process the shot image when it recognizes the objects that can be operated, so that a user can visually recognize the objects that can be operated. As a method for processing the shot image, a method for processing the shot image by displaying the names of the objects that can be operated in a speech balloon form like in the example of Fig. 2 can be used, but the method therefor is not limited to this.

Further, the recognition unit 151 receives a voice from a user, and recognizes the voice from the learned model 181.

The estimation unit 152 has a function of having a conversation with a user of the voice input interface 360 by voice. Specifically, the estimation unit 152 refers to the utterance DB 182 and generates voice output of a response utterance suitable for the utterance which a user has input to the voice input interface 360. At this time, if a user has also input, to the remote terminal 300, handwritten input information to the shot image, the estimation unit 152 also refers to the handwritten input information and generates voice output of a response utterance.

The estimation unit 152 estimates, based on the handwritten input information which a user has input to the shot image and a conversation history of the voice input, an object to be operated which has been requested to be operated by the hand 124 and estimates a way of performing a motion performed by the hand 124, the motion having been requested to be performed with regard to the estimated object to be operated. Further, the estimation unit 152 may determine whether or not there is an additionally requested motion to be performed by the autonomous traveling robot 100 based on the conversation history of the voice input, and if it is determined that there is an additionally requested motion, the estimation unit 152 may estimate a way of performing this motion. At this time, the estimation unit 152 may analyze the content of the handwritten input information and the content of the voice input, and perform the above-described estimation while at the same time confirming the analyzed contents with the voice input interface 360 using the voice output.

### (Description of Object to be operated and Way of performing Motion according to Embodiment)

Referring to Fig. 2 as an example, a detailed description is given of an estimation method in which the estimation unit 152 of the autonomous traveling robot 100 estimates an object to be operated, a way of performing a motion, and the like.

In the example shown in Fig. 2, first, the autonomous traveling robot 100 receives a voice input of a user's utterance "Get this" from the voice input interface 360. At this time, objects that can be grasped shown in the shot image 311 shot by the autonomous traveling robot 100 are the cup 401, the calculator 402, the smartphone 403, and the sheets of paper 404 that have been recognized by the recognition unit 151. Further, the autonomous traveling robot 100 also receives the handwritten input information 931 input to the position on the smartphone 403 on this shot image 311 from the remote terminal 300.

Therefore, the estimation unit 152 analyzes (i.e., determines) that a way of performing a motion is to hold and lift the object to be operated based on the voice input of "Get this". Further, the estimation unit 152 analyzes (i.e., determines) that the object to be operated among the objects that can be operated which the recognition unit 151 has recognized is the smartphone 403 located at the input position of the handwritten input information 931 based on the handwritten input information 931. Note that the estimation unit 152 can recognize the input position of the handwritten input information 931 on the shot image 311 by any method. For example, if the remote terminal 300 includes, in the handwritten input information 931, position information indicating the input position of the handwritten input information 931 on the shot image 311 and transmits this handwritten input information 931, the estimation unit 152 can recognize the input position of the handwritten input information 931 based on this position information. Alternatively, if the remote terminal 300 transmits the shot image 311 processed into a state in which the handwritten input information 931 has been input, the estimation unit 152 can recognize the input position of the handwritten input information 931 based on this shot image 311.

Then, in order to confirm with a user that the object to be operated is the smartphone 403, the estimation unit 152 generates voice output of a response utterance "Okay. Do you mean this smartphone?" and transmits the generated voice output to the voice input interface 360.

Next, the autonomous traveling robot 100 receives a voice input of a user's utterance "Yes. Bring it to me" from the remote terminal 300. Thus, the estimation unit 152 estimates that the object to be operated which has been requested to be grasped by the hand 124 is the smartphone 403, and that a way of performing a motion is to hold and lift the smartphone 403.

Further, as the estimation unit 152 successfully estimates the object to be operated and the way of performing a motion, it generates voice output of a response utterance "Okay" and transmits the generated voice output to the voice input interface 360.

Further, the estimation unit 152 analyzes (i.e., determines), based on the voice input of "Bring it to me", that an additionally requested motion of the autonomous traveling robot 100 is to convey the smartphone 403 held by the grasping motion to "me".

Then, in order to confirm where "me" is, the estimation unit 152 generates voice output of a response utterance "Are you in the living room?" and transmits the generated voice output to the voice input interface 360.

Next, the autonomous traveling robot 100 receives a voice input of a user's utterance "Yes, thank you" from the voice input interface 360. Thus, the estimation unit 152 estimates that the autonomous traveling robot 100 has been additionally requested to convey the smartphone 403 to the living room.

Consequently, the estimation unit 152 estimates that the overall motion which the autonomous traveling robot 100 has been requested to perform is to hold the smartphone 403 and convey it to the living room.

As described above, the estimation unit 152 can estimate an object to be operated which has been requested to be grasped by the hand 124 and a way of performing a motion by the hand 124, the motion having been requested to be performed with regard to the object to be operated. Further, if the autonomous traveling robot 100 has been requested to perform an additional motion, the estimation unit 152 can also estimate a way of performing this motion.

After the aforementioned estimation performed by the estimation unit 152 is completed, the control unit 150 makes preparations to start performing a motion by the hand 124, the motion having been requested to be performed with regard to the object to be operated. Specifically, first, the control unit 150 drives the arm 123 to a position where the hand camera 135 can observe an object to be operated. Next, the control unit 150 causes the hand camera 135 to shoot the object to be operated and thus recognizes the state of the object to be operated.

Then, the control unit 150 generates a trajectory of the hand 124 for enabling a motion that has been requested to be performed with regard to the object to be operated based on the state of the object to be operated and a way of performing the motion by the hand 124, the motion having been requested to be performed with regard to the object to be operated. At this time, the control unit 150 generates a trajectory of the hand 124 so that it satisfies predetermined operation conditions. The trajectory may be indicated by a straight line, a curved line, an arrow, or the like by a handwritten input interface. The predetermined operation conditions include the condition at the time when the hand 124 grasps the target to be operated, condition of the trajectory of the hand 124 until the hand 124 grasps the object to be operated, and the like. Examples of the conditions at the time when the hand 124 operates the object to be operated include preventing the arm 123 from extending too much when the hand 124 operates the object to be operated. Further, examples of the conditions of the trajectory of the hand 124 until the hand 124 operates the object to be operated include that the hand 124 describes a straight trajectory when the object to be operated is a knob for a drawer.

When the control unit 150 generates a trajectory of the hand 124, it transmits a driving signal corresponding to the generated trajectory to the upper-body drive unit 146. The hand 124 performs a motion with regard to the object to be operated in response to the driving signal.

Note that when the estimation unit 152 has estimated a way of performing a motion which the autonomous traveling robot 100 has been additionally requested to perform, the control unit 150 causes the autonomous traveling robot 100 to perform the additionally requested motion before or after generation of a trajectory of the hand 124 and a grasping motion of the hand 124. At this time, depending on a motion which the autonomous traveling robot 100 has additionally been requested to perform, a motion for moving the autonomous traveling robot 100 may be required. For example, as shown in the example of Fig. 2, when a motion for holding and conveying an object to be operated has additionally been requested, it is necessary to move the autonomous traveling robot 100 to a conveyance destination. Further, when there is some distance between the current position of the autonomous traveling robot 100 and the position of the object to be operated, it is necessary to move the autonomous traveling robot 100 to the vicinity of the object to be operated.

When a motion for moving the autonomous traveling robot 100 is required, the control unit 150 acquires, from the map DB 183, map information describing a space in the first environment where the autonomous traveling robot 100 is located in order to generate a route for moving the autonomous traveling robot 100. The map information may describe, for example, the position and the layout of each room in the first environment. Further, the map information may describe obstacles such as cabinets and tables located in each room. However, in regard to obstacles, it is also possible to detect whether there are obstacles in the moving direction of the autonomous traveling robot 100 by a detection signal received from the laser scanner 133. Further, when there is some distance between the current position of the autonomous traveling robot 100 and the position of the object to be operated, it is possible, depending on the learned model 181, to obtain the distance to the object to be operated and the direction in which the object to be operated is located from the shot image acquired by the stereo camera 131. Note that the distance to the object to be operated and the direction in which the object to be operated is located may be obtained by performing an image analysis of the shot image of the first environment or from information received from other sensors.

Therefore, when the control unit 150 causes the autonomous traveling robot 100 to move to the vicinity of the object to be operated, the control unit 150 generates, based on the map information, the distance to the object to be operated and the direction in which the object to be operated is located, the presence or absence of obstacles, and the like, a route for the autonomous traveling robot 100 to move from its current position to the vicinity of the object to be operated while avoiding obstacles. Further, when the control unit 150 causes the autonomous traveling robot 100 to move to the conveyance destination, the control unit 150 generates, based on the map information, the presence or absence of obstacles, and the like, a route for the autonomous traveling robot 100 to move from its current position to the conveyance destination while avoiding obstacles. Then, the control unit 150 transmits a driving signal corresponding to the generated route to the movable-base drive unit 145. The movable-base drive unit 145 moves the autonomous traveling robot 100 in response to the driving signal. Note that when there is, for example, a door in the route to the conveyance destination, the control unit 150 needs to generate a trajectory of the hand 124 for the autonomous traveling robot 100 to hold the door knob near the door and then open and close the door, and also needs to control the hand 124 corresponding to the generated trajectory. In this case, the generation of the trajectory and the control of the hand 124 may be performed by using, for example, a method similar to that described above.

Fig. 7 is a block diagram showing a configuration of the remote terminal according to the embodiment. Main elements related to a process for allowing a user to input handwritten input information to a shot image received from the autonomous traveling robot 100 and a process for allowing a user to have a conversation with the autonomous traveling robot 100 through a voice input will be described below. However, the autonomous traveling robot 100 may include elements, as a configuration of the remote terminal 300, other than the above ones, and may include additional elements that contribute to the process for allowing a user to input handwritten input information.

A calculation unit 350 is, for example, a CPU and performs control of the whole remote terminal 300 and various calculation processes by executing a control program read from a memory 380. The display panel 341 is, for example, a liquid crystal panel, and displays, for example, a shot image sent from the autonomous traveling robot 100 and a chat screen of a text chat. Further, the display panel 341 displays, on the chat screen, a voice input of the utterance input by a user and voice output of the response utterance sent from the autonomous traveling robot 100.

An input unit 342 includes a touch panel disposed so as to be superimposed on the display panel 341 and a push button provided on a peripheral part of the display panel 341. The input unit 342 passes, to the calculation unit 350, the handwritten input information and the voice input of the utterance which a user has input by touching a touch panel. Examples of the handwritten input information and the voice input are as shown in Fig. 2.

The memory 380 is a nonvolatile storage medium. For example, a solidstate drive is used for the memory 380. The memory 380 stores, in addition to a control program for controlling the remote terminal 300, various parameter values, functions, lookup tables, and the like used for the control and the calculation.

A communication unit 390 is, for example, a wireless LAN unit and performs radio communication with the wireless router 700. The communication unit 390 receives the shot image sent from the autonomous traveling robot 100 and passes it to the calculation unit 350. Further, the communication unit 390 cooperates with the calculation unit 350 to transmit handwritten input information to the autonomous traveling robot 100.

### (Description of Operation Method of Autonomous Traveling Robot according to Embodiment)

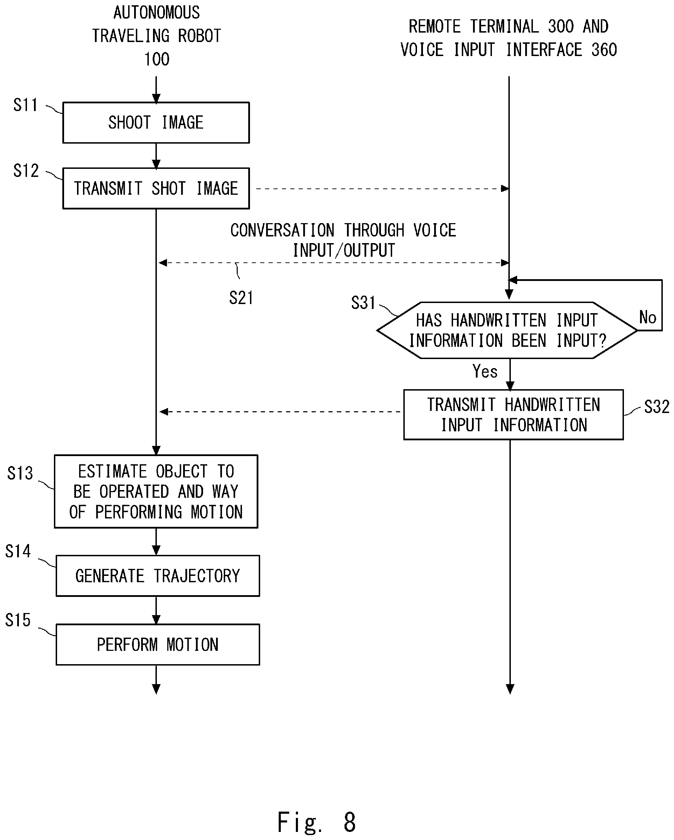

Next, an overall description is given of processes performed by the autonomous traveling robot operation system 10 according to this embodiment. Fig. 8 is a flowchart of an autonomous traveling robot operation method according to this embodiment. The flow on the left side thereof represents a flow of processes performed by the autonomous traveling robot 100, and the flow on the right side thereof represents a flow of processes performed by the remote terminal 300 and the voice input interface 360. Further, exchanges of handwritten input information, a shot image, and a voice input performed via the system server 500 are indicated by dotted-line arrows.

The control unit 150 of the autonomous traveling robot 100 causes the stereo camera 131 to shoot the first environment in which the autonomous traveling robot 100 is located (Step S11), and transmits the shot image to the remote terminal 300 via the communication unit 190 (Step S12).

After the calculation unit 350 of the remote terminal 300 receives the shot image from the autonomous traveling robot 100 via the communication unit 390, the calculation unit 350 displays the received shot image on the display panel 341.

After that, a user has a conversation with the autonomous traveling robot 100 using the voice input interface 360 (Step S21). Specifically, after a user inputs voice of his/her utterance, the voice input interface 360 transmits the voice to the autonomous traveling robot 100 via the communication unit. Further, after the voice input interface 360 receives voice output of a response utterance from the autonomous traveling robot 100 via the communication unit, the voice input interface 360 outputs the voice output to a headphone.

Further, the calculation unit 350 of the remote terminal 300 causes the display panel 341 to transit to a state in which handwritten input information input to the shot image can be received (Step S31). When a user inputs handwriting input information to the shot image via the input unit 342 which is a touch panel (Yes in Step S31), the calculation unit 350 transmits the handwriting input information to the autonomous traveling robot 100 via the communication unit 390 (Step S32).

Upon receiving, from the remote terminal 300, the handwritten input information which a user has input to the shot image, the estimation unit 152 of the autonomous traveling robot 100 estimates, based on this handwritten input information and a conversation history of the voice input, an object to be operated which has been requested to be operated by the hand 124 and estimates a way of performing a motion by the hand 124, the motion having been requested to be performed with regard to the estimated object to be operated (Step S13). At this time, the estimation unit 152 acquires from the recognition unit 151 the information of the objects that can be operated shown in the shot image to which the handwritten input information is input, and estimates the object to be operated from among the objects that can be operated based on the handwritten input information and the conversation history of the voice input. Further, the estimation unit 152 analyzes the content of the handwritten input information and the content of the conversation history of the voice input, and performs the above-described estimation while at the same time confirming the analyzed contents with the voice input interface 360 using the voice output.

After that, the control unit 150 of the autonomous traveling robot 100 generates a trajectory of the hand 124 for enabling the motion that has been requested to be performed with regard to the object to be operated (Step S14). After the control unit 150 has generated a trajectory of the hand 124, the control unit 150 controls the upper-body drive unit 146 in accordance with the generated trajectory, whereby the motion is performed by the hand 124 with regard to the object to be operated (Step S15).

Note that in Step S13, the estimation unit 152 may determine whether there is an additionally requested motion to be performed by the autonomous traveling robot 100 based on the conversation history of the voice input, and if it is determined that there is an additionally requested motion, it may estimate a way of performing this motion. The autonomous traveling robot 100 may analyze the content of the conversation history of the voice input and perform this estimation while at the same time confirming the analyzed content with the voice input interface 360 using the voice output.

When the estimation unit 152 has estimated a way of performing a motion which the autonomous traveling robot 100 has been additionally requested to perform, the control unit 150 causes the autonomous traveling robot 100 to perform the additionally requested motion before or after Steps S14 and S15. When a motion for moving the autonomous traveling robot 100 is required for performing such an above motion, the control unit 150 generates a route for moving the autonomous traveling robot 100. Then, the control unit 150 transmits a driving signal corresponding to the generated route to the movable-base drive unit 145. The movable-base drive unit 145 moves the autonomous traveling robot 100 in response to the driving signal.

As described above, according to this embodiment, the estimation unit 152 estimates, based on the handwritten input information which a user has input to the shot image obtained by shooting the environment in which the autonomous traveling robot 100 is located and a conversation history of the voice input, an object to be operated which has been requested to be operated by the hand 124 and estimates a way of performing a motion performed by the hand 124, the motion having been requested to be performed with regard to the estimated object to be operated.

By this configuration, it is possible to have the autonomous traveling robot 100 perform a motion by a remote control without the need for a user to recollect predetermined instruction figures and input them by handwriting. Thus, it is possible to implement the autonomous traveling robot operation system 10 that enables a more intuitive operation.

Further, according to this embodiment, the estimation unit 152 may analyze the content of the handwritten input information input to the shot image and the content of the conversation history of the voice input, and confirm the analyzed contents with the voice input interface 360 (a user) using the voice output.

By this configuration, it is possible to communicate with a user in regard to the operation of a motion while at the same time confirming the intention of the user through a voice. Thus, it is possible to implement the autonomous traveling robot operation system 10 that enables an intuitive operation in which the intention of a user is further reflected.

Further, some or all of the processes performed in the above-described autonomous traveling robot 100 and system server 500 can be implemented in the form of a computer program. Such a program can be stored and provided to the computer by using any type of non-transitory computer readable media. Non-transitory computer readable media include various types of substantial recording media. Examples of the non-transitory computer readable media include a magnetic recording medium (such as a flexible disk, a magnetic tape, and a hard disk drive), a magneto-optic recording medium (such as a magneto-optic disk), a CD-ROM (Read Only Memory), a CD-R, a CD-R/W, and a semiconductor memory (such as a mask ROM, a PROM (Programmable ROM), an EPROM (Erasable PROM), a flash ROM, and a RAM (Random Access Memory)). Further, the program may be supplied to the computer by various types of transitory computer readable media. Examples of transitory computer readable media include electric signals, optical signals, and electromagnetic waves. Transitory computer readable media can provide programs to computers through wired or wireless communication channels such as wires and optical fibers.

Note that the present invention is not limited to the above-described example embodiment, and they can be modified as appropriate without departing from the scope and spirit of the invention.

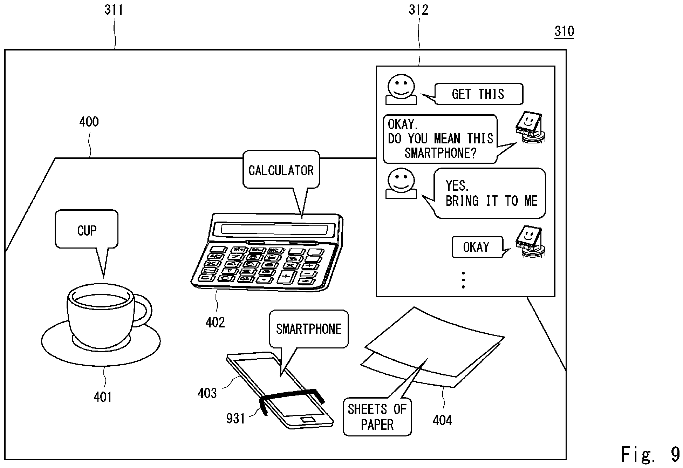

For example, in the above-described embodiment, the display screen 310 displayed on the display panel 341 of the remote terminal 300 is, for example, a screen on which the shot image 311 is arranged as shown in Fig. 2, but this is merely one example. The display screen 310 may be, for example, a screen in which a chat screen is superimposed on the shot image. Fig. 9 shows an example of a display screen displayed on a display panel of a remote terminal according to the embodiment. For example, Fig. 9 shows an example of the display screen 310 in which a chat screen 312 is superimposed on the shot image 311.

In the above-described embodiment, the estimation unit 152 confirms the analyzed content of the handwritten input information input to the shot image with the voice input interface 360 (a user) by using voice output. At this time, the object to be operated analyzed from the handwritten input information may be confirmed with the remote terminal 300 (a user) by cutting out an image of the object to be operated from the shot image and displaying it on the chat screen. In order to confirm with a user that the object to be operated analyzed from the handwritten input information 931 is the smartphone 403, the estimation unit 152 transmits, to the remote terminal 300, voice output of a response utterance "Okay. Do you mean this smartphone?" and an image of the smartphone 403 cut out from the shot image 311 and displays the voice and the image on the display panel 341.

Further, in the above-described embodiment, an example in which one piece of handwritten input information is input to the shot image has been described, but this is merely one example. A plurality of pieces of handwritten input information may be input to the shot image. When a plurality of pieces of handwritten input information are input to the shot image, the estimation unit 152 may analyze each of the plurality of pieces of handwritten input information, and estimate objects to be operated and ways of performing motions while at the same time confirming the contents of the analysis with the voice input interface 360 (a user) using the voice output. At this time, the estimation unit 152 may estimate that the order of performing the motions is the order in which the handwritten input information pieces corresponding to the motions are input. Alternatively, the estimation unit 152 may estimate the order of performing the motions while at the same time confirming it with the voice input interface 360 (a user) using the voice output.

Further, in the above-described embodiment, the autonomous traveling robot 100 includes the recognition unit 151 and the estimation unit 152, but this is merely an example. The functions of the recognition unit 151 and the estimation unit 152 other than the function of having a conversation with a user of the voice input interface 360 may be included in the remote terminal 300 or in the system server 500.

Further, in the above-described embodiment, the autonomous traveling robot 100 and the remote terminal 300 exchange a shot image, handwritten input information, and a voice input via the Internet 600 and the system server 500, but this is merely an example. The autonomous traveling robot 100 and the remote terminal 300 may exchange a shot image, handwritten input information, and a voice input by direct communication.

Further, in the above-described embodiment, the imaging unit (the stereo camera 131) included in the autonomous traveling robot 100 is used, but this is merely an example. The imaging unit may be any imaging unit provided at any place in the first environment in which the autonomous traveling robot 100 is located. Further, the imaging unit is not limited to a stereo camera and may be a monocular camera or the like.

Further, in the above-described embodiment, the example in which the object to be operated is the autonomous traveling robot 100 including the hand 124 at the tip of the arm 123 as an end effector has been described, but this is merely an example. The object to be operated may be any device including an end effector and performing a motion by using the end effector. Further, the end effector may be a grasping part (e.g., a suction part) other than a hand.

If an instruction has been sent to an autonomous traveling robot by adding a voice input to a handwritten input, it may be difficult to determine which range of combinations of instructions corresponds to a single motion instruction or to determine whether an instruction has already been sent so that the autonomous traveling robot can start moving. In order to solve this problem, another input information corresponding to intervals of a handwritten input instruction and a voice instruction may be received. For example, in a case where an input corresponding to an interval of an instruction such as "start" has been received after a plurality of instructions of handwritten input and voice input such as a way of grasping or a trajectory of the traveling autonomous robot are received, the autonomous traveling robot starts a motion. The autonomous traveling robot can integrate and determine instructions that it has received up to a timing when it has received an instruction corresponding to the interval, and a user can instruct a motion so as to clarify the motion to be performed by the autonomous traveling robot.

For example, by painting, by a handwritten input, areas where it is desired to avoid collisions and supplementing this information by a voice input, it is possible to cause the autonomous traveling robot to understand the meaning of the instruction.

For example, in a case where a user utters a certain shape by a voice input, a sketch of this shape is displayed. By manipulating this sketch, a motion of a robot can be specified.

For example, by uttering "Move slowly" by a voice input or by drawing a line slowly by hand, an adverbial operation of a motion of a robot can be input.

For example, after drawing a trajectory of the autonomous traveling robot and causing the autonomous traveling robot to perform a motion, the motion of the autonomous traveling robot such as a motion start, stop, change in the speed, change in the direction, or change in the trajectory can be controlled in real time by a voice input and a handwritten input. The start and stop of the motion may be performed by the handwritten input, not by the voice input.

For example, information on specification of a place by a handwritten input and a voice input may be converted into a text in the form of a chat and this text may be stored. In this way, an instruction sentence for the autonomous traveling robot can be formed. In addition, missing information may be further supplemented by the voice input and the handwritten input.

For example, an item that is not displayed on a shot image can be indicated by a voice input. Further, it is possible to supplement, by a handwritten input, an item that is displayed on a shot image but cannot be clearly indicated. For example, an object for which there is no target, such as "the right side of the middle of a desk", can be supplemented by the handwritten input.

For example, an autonomous traveling robot may provide visual and auditory feedback on instructions for a user and the user may check the feedback, so that a clear instruction will be sent.

For example, if an autonomous traveling robot approaches a junction such as an intersection or a dead end, a user may select left or right by a handwritten input or a button operation, so that the user can input the direction in which the autonomous traveling robot travels.

For example, an autonomous traveling robot may provide a content of instructions that have already been given and the autonomous traveling robot understands, and present a further instruction that is necessary to the user.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. An autonomous traveling robot operation system comprising:
an autonomous traveling robot (100) configured to shoot an environment near the autonomous traveling robot (100) and operates an object to be operated;
a handwritten input interface (300) configured to display an image shot by the autonomous traveling robot (100) and receive a handwritten input to the displayed image; and
a voice input interface (360) configured to receive a voice input to the object to be operated,
wherein the autonomous traveling robot operation system operates the autonomous traveling robot (100) in such a way that the autonomous traveling robot (100) operates the object to be operated in accordance with instructions of the handwritten input and the voice input.

2. The autonomous traveling robot operation system according to claim 1, wherein the voice input interface (360) enables a user to have a conversation with the autonomous traveling robot (100) using a voice recognition unit that receives a voice, recognizes the voice, and outputs a motion, the voice recognition unit being configured by performing machine learning, and inputs a motion of the autonomous traveling robot (100).

3. The autonomous traveling robot operation system according to claim 1, wherein an instruction is sent to the object to be operated that is not displayed on the image using the voice input interface (360).

4. The autonomous traveling robot operation system according to claim 1, wherein the handwritten input interface (300) inputs the object to be operated using an object estimation unit configured to perform machine learning so as to receive the image as an input, estimate an object in the image, and output a result of the estimation.

5. The autonomous traveling robot operation system according to claim 1, wherein a trajectory of the autonomous traveling robot (100) is input by using the handwritten input interface (300).

6. The autonomous traveling robot operation system according to claim 1, wherein an adverbial operation of a motion is input by using the handwritten input interface (300).

7. The autonomous traveling robot operation system according to claim 1, wherein the autonomous traveling robot (100) is operated to perform grasping, cutting, moving, screw fixing, or welding.

8. An autonomous traveling robot operation method comprising operating an autonomous traveling robot (100) in such a way that the autonomous traveling robot (100) operates an object to be operated in accordance with instructions of a handwritten input and a voice input.

9. A program for causing an information processing apparatus to operate an autonomous traveling robot (100) in such a way that the autonomous traveling robot (100) operates an object to be operated in accordance with instructions of a handwritten input and a voice input.
